# EUROPEAN PATENT APPLICATION

(11) **EP 4 832 580 A1**
(43) Date of publication of application: **28.10.2026**
(21) Application number: 25747536.8
(22) Date of filing: 15.01.2025
(51) Int. Cl.: H04W 36/16

(54) **CALL SERVICE SWITCHING METHOD AND APPARATUS**

(30) Priority: 30.01.2024 CN 202410135043
(71) Applicant: Honor Device Co., Ltd., Shenzhen, Guangdong 518040 (CN)
(72) Inventor: ZHANG, Zhongli, Shenzhen, Guangdong 518040 (CN)
(74) Representative: Isarpatent
(86) International application number: PCT/CN2025/072463
(87) International publication number: WO 2025/161962

(57) **Abstract**

This application provides a call service switching method and an apparatus. It is determined that a dual card frequency band combination of a dual SIM device is a DSDS mode, at least one of two SIM cards supports a VoWiFi service, and a preference setting for the SIM card is mobile network taking precedence or an automatic mode, and in addition, network signal strength of a current environment meets a Wi-Fi switching threshold in a switching policy (that is, a second switching policy) corresponding to Wi-Fi taking precedence. The SIM card is controlled to switch to the VoWiFi service. In this way, the SIM card uses a Wi-Fi network to carry a call service, without occupying a radio frequency resource. The other SIM card can normally use a radio frequency resource. It can be learned that according to this solution, in a scenario in which the current environment is covered by the Wi-Fi network, the SIM card that supports the VoWiFi service is directly controlled to switch to the VoWiFi service, without occupying a radio frequency resource, so that the other SIM card can normally use the radio frequency resource, thereby resolving a problem that in the DSDS mode, one SIM card performs the call service and the other SIM card cannot use the radio frequency resource.

## Description

This application claims priority to Chinese Patent Application No. 202410135043.4, filed with the China National Intellectual Property Administration on January 30, 2024 and entitled "CALL SERVICE SWITCHING METHOD AND APPARATUS", which is incorporated herein by reference in its entirety.

### TECHNICAL FIELD

This application relates to the field of communication technologies, and in particular, to a call service switching method and an apparatus.

### BACKGROUND

Currently, many mobile terminals support installation of two subscriber identity module (Subscriber Identity Module, SIM) cards. Such mobile terminals may also be referred to as dual SIM devices. Most dual SIM devices support a dual SIM dual standby (Dual SIM Dual Standby, DSDS) mode. In the DSDS mode, a mobile terminal can use a radio frequency resource provided by only one SIM at the same time, that is, can use only one SIM card at the same time to perform a call service (that is, a service for making or answering a call) or an internet access service (or referred to as an internet access data service or a mobile data service), and cannot implement concurrency of call services or internet access service of two SIM cards. In other words, in the DSDS mode, when a card 1 performs the call service, a card 2 (that is, the other SIM card in the dual SIM device) does not have a radio frequency resource, that is, the card 2 cannot provide any service that requires a radio frequency resource, such as the call service or the internet access service, leading to poor user experience.

### SUMMARY

In view of this, this application provides a call service switching method and an apparatus, so as to resolve at least some of the foregoing problems. Technical solutions disclosed in this application are as follows:

According to a first aspect, this application provides a call service switching method, applied to a mobile terminal, where the mobile terminal includes a first SIM card and a second SIM card, at least one of the two SIM cards supports a VoWiFi service, and the method includes: It is determined that a frequency band combination of the first SIM card and the second SIM card is a DSDS mode; it is determined that the first SIM card supports the VoWiFi service and that a call service preference setting for the first SIM card is mobile network taking precedence or an automatic mode; and the first SIM card is switched to the VoWiFi service when it is detected that latest obtained network signal strength meets a Wi-Fi switching threshold in a second switching policy, where the second switching policy is a switching policy corresponding to Wi-Fi taking precedence, the Wi-Fi switching threshold in the second switching policy is less than a Wi-Fi switching threshold in a first switching policy, the first switching policy is a switching policy corresponding to the mobile network taking precedence, and the network signal strength includes Wi-Fi signal strength or Wi-Fi signal strength and mobile network signal strength. In this way, when it is detected that network signal strength of a current environment meets the second switching policy, the first SIM card is directly switched to the VoWiFi service, that is, the first SIM card preferentially uses a Wi-Fi network to carry a call service, so that the other SIM card can normally use the radio frequency resource, thereby resolving a problem that in the DSDS mode, one SIM card performs the call service and the other SIM card cannot use the radio frequency resource.

According to a second aspect, this application further provides a call service switching method, applied to a mobile terminal, where the mobile terminal includes a first SIM card and a second SIM card, at least one of the two SIM cards supports a VoWiFi service, and the method includes: It is determined that a frequency band combination of the first SIM card and the second SIM card is a DSDS mode; it is detected that the first SIM card supports the VoWiFi service and that a call service preference setting for the first SIM card is mobile network taking precedence or an automatic mode; the first SIM card registers a mobile network-based voice communication service when the first SIM card is in a non-call state; and the first SIM card is switched to the VoWiFi service when the first SIM card is in a call state and if it is detected that latest obtained network signal strength meets a Wi-Fi switching threshold in a second switching policy, where the second switching policy is a switching policy corresponding to Wi-Fi taking precedence, the Wi-Fi switching threshold in the second switching policy is less than a Wi-Fi switching threshold in a first switching policy, the first switching policy is a switching policy corresponding to the mobile network taking precedence, and the network signal strength includes Wi-Fi signal strength or Wi-Fi signal strength and mobile network signal strength. In this way, the first SIM card is set to the mobile network taking precedence or the automatic mode, and after the call service of the SIM card starts, the Wi-Fi network is preferentially used to carry the call service. The first SIM card is switched to the VoWiFi service only when the first SIM card needs to occupy a radio frequency resource. On the basis of resolving the problem that in the DSDS mode, one SIM card performs the call service and the other SIM card cannot use the radio frequency resource, the mobile terminal is prevented from frequently switching between a VoLTE service (or a VoNR service) and the VoWiFi service, thereby reducing power consumption of the mobile terminal and improving energy efficiency.

In a possible implementation of the first aspect, the method further includes: The first SIM card is switched to a mobile network-based voice communication service when it is detected that the latest obtained network signal strength meets a mobile network switching threshold in the second switching policy, where the mobile network switching threshold in the second switching policy is greater than a mobile network switching threshold in the first switching policy. It can be learned that the first SIM card that supports the VoWiFi service preferentially uses the VoWiFi service. The first SIM card is switched to the VoLTE or the VoNR only when a Wi-Fi signal does not meet a quality requirement of the call service, thereby meeting a requirement of the second SIM card for using the radio frequency resource to the greatest extent, and improving utilization of a Wi-Fi network resource and the radio frequency resource in the DSDS mode.

In a possible implementation of the second aspect, the switching the first SIM card to the VoWiFi service when the first SIM card is in a call state and if it is detected that latest obtained network signal strength meets a Wi-Fi switching threshold in a second switching policy includes: The first SIM card is switched to the VoWiFi service after a call service of the first SIM card starts for preset duration and if it is detected that the latest obtained network signal strength meets the Wi-Fi switching threshold in the second switching policy. It can be learned that, according to this solution, network switching is performed only after it is detected that the call service of the SIM card that meets the foregoing condition starts for the preset duration. This avoids unstable call quality caused by network switching in a call service establishment phase, thereby ensuring the call quality without occupying a radio frequency resource, so that the other SIM card can use the radio frequency resource.

In a possible implementation of the second aspect, the method further includes: After it is detected that the call service of the first SIM card ends, the first SIM card is controlled, according to the first switching policy, to switch between a mobile network and a Wi-Fi network.

In a possible implementation of the first aspect or the second aspect, a preference setting option for a call service in the mobile terminal includes the mobile network taking precedence and the Wi-Fi taking precedence; and the first SIM card supports the VoWiFi service and the first SIM card is set to the mobile network taking precedence, and the second SIM card does not support the VoWiFi service; or both the first SIM card and the second SIM card support the VoWiFi service, and at least the first SIM card is set to the mobile network taking precedence.

In a possible implementation of the first aspect or the second aspect, a preference setting option for a call service in the mobile terminal includes the mobile network taking precedence, the Wi-Fi taking precedence, and the automatic mode; and the first SIM card supports the VoWiFi service and the first SIM card is set to the automatic mode, and the second SIM card does not support the VoWiFi service; or both the first SIM card and the second SIM card support the VoWiFi service, and at least the first SIM card is set to the mobile network taking precedence or the automatic mode, or both the first SIM card and the second SIM card are set to the mobile network taking precedence or the automatic mode.

In a possible implementation of the first aspect or the second aspect, a process of obtaining the latest network signal strength includes: The mobile terminal periodically detects the Wi-Fi signal strength and the mobile network signal strength. The mobile terminal periodically refreshes the network signal strength, and evaluates, for each refresh, a network switching process of the first SIM card with reference to a corresponding switching policy, thereby improving stability of the call service of the mobile terminal.

In a possible implementation of the first aspect or the second aspect, the determining that the first SIM card supports the VoWiFi service and that a call service preference setting for the first SIM card is mobile network taking precedence or an automatic mode includes: A voice call network supported by each SIM card in a settings application in the mobile terminal is obtained; and a preference setting for a Wi-Fi call in the settings application in the mobile terminal is obtained.

In a possible implementation of the first aspect or the second aspect, the mobile terminal includes a modem module and a Wi-Fi module, the modem module is configured to obtain mobile network signal strength of the first SIM card, and the Wi-Fi module is configured to obtain Wi-Fi signal strength of an environment in which the mobile terminal is currently located; the modem module receives the Wi-Fi signal strength obtained by the Wi-Fi module, and determines, based on a latest obtained mobile network signal and the Wi-Fi signal strength, that the network signal strength meets the Wi-Fi switching threshold in the second switching policy, and switches the first SIM card to the VoWiFi service. In this way, the modem module directly controls a service network of the first SIM card, without a need to transfer a switching instruction layer by layer, thereby increasing a switching speed.

According to a third aspect, this application further provides a mobile terminal, where the mobile terminal includes a memory, an application processor, and a baseband processor; the memory is configured to store program code; and the application processor or the baseband processor is configured to run the program code, to enable the mobile terminal to implement the call service switching method according to any one of the implementations of the first aspect or the second aspect. The baseband processor or the application processor in the mobile terminal performs the method according to any one of the implementations of the first aspect or the second aspect.

According to a fourth aspect, this application further provides a computer-readable storage medium, where the computer-readable storage medium stores instructions, and when the instructions are run on a mobile terminal, the mobile terminal is enabled to perform the call service switching method according to any one of the implementations of the first aspect or the second aspect.

According to a fifth aspect, this application further provides a chip system, including an application processor, a baseband processor, and an interface, where the interface is configured to receive code instructions and transmit the code instructions to the application processor or the baseband processor; and the application processor or the baseband processor runs the code instructions to implement the call service switching method according to any one of the implementations of the first aspect or the second aspect.

According to a sixth aspect, this application further provides a computer program product, where the computer program product stores instructions, and when the computer program product runs on a mobile terminal, the mobile terminal is enabled to implement the call service switching method according to any one of the implementations of the first aspect or the second aspect.

### BRIEF DESCRIPTION OF DRAWINGS

FIG. 1 is a schematic diagram of a structure of a mobile terminal according to an embodiment of this application;
FIG. 2 is a schematic diagram of a software architecture of a mobile terminal according to an embodiment of this application;
FIG. 3A to FIG. 3G are schematic diagrams of an interface for a preference setting for a Wi-Fi call according to an embodiment of this application;
FIG. 4A to FIG. 4C are schematic diagrams of an interface for another preference setting for a Wi-Fi call according to an embodiment of this application;
FIG. 5 is a flowchart of a call service switching method according to an embodiment of this application; and
FIG. 6 is a flowchart of another call service switching method according to an embodiment of this application.

### DESCRIPTION OF EMBODIMENTS

The terms "first", "second", "third", and the like in the specification, claims, and accompanying drawings of this application are used to distinguish between different objects, but are not used to limit a specific sequence.

In the embodiments of this application, words such as "example" or "for example" are used to indicate an example, illustration, or description. Any embodiment or design solution described as "example" or "for example" in the embodiments of this application should not be construed as being more preferred or advantageous than other embodiments or design solutions. Exactly, the words such as "example" or "for example" are intended to present related concepts in a specific manner.

For clarity and brevity of the following embodiments, a brief description of a related technology is first provided.

VoLTE (Voice over LTE) is a 4G network-based voice communication technology.

VoNR (Voice over New Radio) is a 5G network-based voice communication technology, which supports voice call, video call, short message service call, a supplementary service, and the like.

VoWiFi (Voice over Wi-Fi, VoWiFi) means that an operator provides a voice service for a user by using a wireless fidelity (wireless fidelity, Wi-Fi) network. To be specific, the user may use a Wi-Fi network to access a core network of an IP multimedia subsystem (IP Multimedia Subsystem, IMS), and may make or answer a voice or video call when using an internet.

With development of communication technologies, some operators provide a SIM card that supports a Wi-Fi network-based voice communication technology, that is, supports a VoWiFi service. In a scenario in which a dual SIM device is in a DSDS mode, at least one SIM card supports the VoWiFi service, and the SIM card is set to cellular network taking precedence, when one SIM card performs a call service, the other SIM card does not have a radio frequency resource, that is, the other SIM card cannot provide any service that requires a radio frequency resource, such as the call service or the internet access service. For example, a scenario is that a first SIM card supports the VoWiFi service, and a second SIM card does not support the VoWiFi service, and a preference setting for the first SIM card is mobile network taking precedence. To be specific, a priority of the mobile network is higher than that of the Wi-Fi network, that is, the mobile network is preferentially used to carry the call service. In this scenario, when the first SIM card performs the call service, the second SIM card cannot use the radio frequency resource, that is, cannot perform any service that uses a radio frequency resource. For another example, another scenario is that both the first SIM card and the second SIM card support the VoWiFi service, and preference settings for the two SIM cards are both the mobile network taking precedence. In this scenario, when the first SIM card (or the second SIM card) performs the call service, the second SIM card (or the first SIM card) cannot perform any service that uses a radio frequency resource.

To resolve the foregoing problem, this application provides a call service switching method. In a scenario in which a dual card frequency band combination of the dual SIM device is the DSDS mode and does not support a DSDA mode, at least one of the two SIM cards supports the VoWiFi service and a preference setting for the SIM card is the mobile network taking precedence. In addition, Wi-Fi signal strength of a current environment meets a threshold for switching to the Wi-Fi network in a switching policy (which may be referred to as a second switching policy) corresponding to the Wi-Fi taking precedence, and the SIM card is controlled to switch to register the VoWiFi service. In this way, the SIM card uses the Wi-Fi network to carry the call service without occupying a radio frequency resource, and the other SIM card can normally use the radio frequency resource to carry a corresponding service, that is, a service based on the radio frequency resource in the other SIM card is not affected. It can be learned that according to this solution, in a scenario in which the current environment is covered by the Wi-Fi network, a call service of a SIM card that supports the VoWiFi service is directly controlled to switch to the VoWiFi service without occupying a radio frequency resource, so that the other SIM card can normally use the radio frequency resource, thereby resolving a problem that in the DSDS mode, one SIM card performs the call service and the other SIM card cannot use the radio frequency resource.

The mobile terminal to which the call service switching method provided in this embodiment of this application is applicable may be a device that supports making or answering a call and has a Wi-Fi module, such as a machine, a tablet computer, a wearable mobile terminal, or a smartwatch.

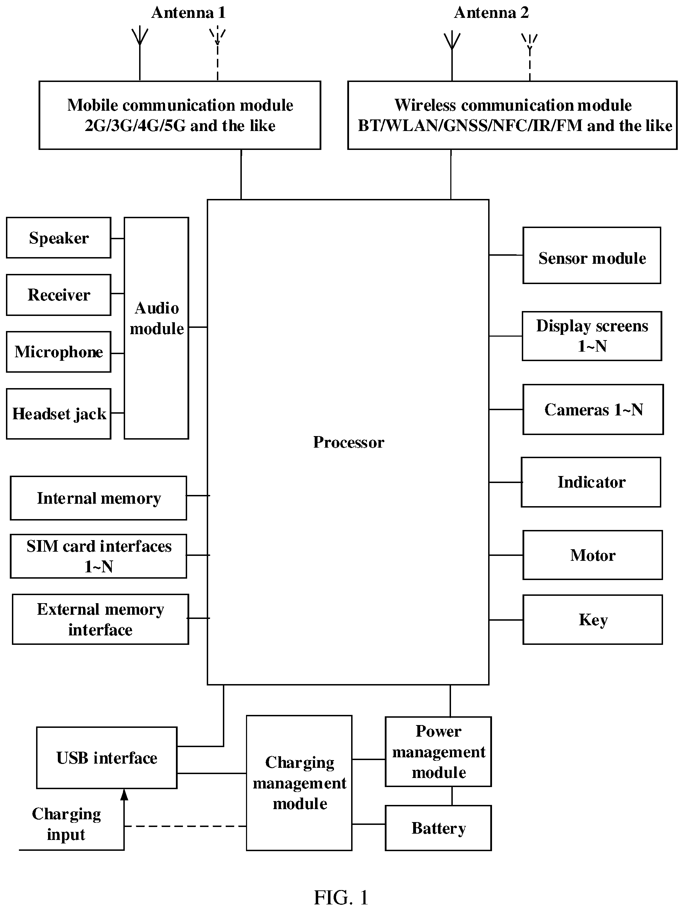

FIG. 1 is a schematic diagram of a structure of a mobile terminal according to an embodiment of this application.

As shown in FIG. 1, the mobile terminal may include a processor, an external memory interface, an internal memory, a universal serial bus (universal serial bus, USB) interface, a charging management module, a power management module, a battery, an antenna 1, an antenna 2, a mobile communication module, a wireless communication module, an audio module, a speaker, a receiver, a microphone, a headset jack, a sensor module, a key, a motor, an indicator, a camera, a display screen, a subscriber identification module (subscriber identification module, SIM) card interface, and the like.

The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in this embodiment does not constitute a specific limitation on the mobile terminal. In some other embodiments, the mobile terminal may include more or fewer components than those shown in the figure, or combine some components, or split some components, or have different component arrangements. The components shown in the figure may be implemented by hardware, software, or a combination of software and hardware.

The processor may include one or more processing units. For example, the processor may include an application processor (application processor, AP), a modem processor, a baseband processor, and the like. Different processing units may be independent devices, or may be integrated into one or more processors.

A wireless communication function of the mobile terminal may be implemented by using the antenna 1, the antenna 2, the mobile communication module, the wireless communication module, the modem processor, the baseband processor, and the like.

The antenna 1 and the antenna 2 are configured to transmit and receive electromagnetic wave signals. Each antenna in the mobile terminal may be configured to cover one or more communication frequency bands. Different antennas may be further multiplexed to improve antenna utilization.

The mobile communication module may provide a solution for wireless communication that is applicable to the mobile terminal and that includes 2G/3G/4G/5G and the like.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transfers, to the baseband processor for processing, the low-frequency baseband signal obtained through demodulation. The low-frequency baseband signal is processed by the baseband processor and then transferred to the application processor. The application processor outputs a sound signal by using an audio device (which is not limited to the speaker, the receiver, or the like), or displays an image or a video by using the display screen. In some embodiments, the modem processor may be an independent device. In some other embodiments, the modem processor may be independent of the processor and disposed in a same device as the mobile communication module or another functional module.

The wireless communication module may provide a solution for wireless communication that is applied to the mobile terminal and that includes a wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module may be one or more devices integrating at least one communication processing module.

In some embodiments, the antenna 1 and the mobile communication module of the mobile terminal are coupled, and the antenna 2 and the wireless communication module of the terminal are coupled, so that the mobile terminal can communicate with a network and another device by using a wireless communication technology.

The external memory interface may be configured to connect to an external memory card such as a Micro SD card, to extend a storage capability of the mobile terminal. The external memory card communicates with the processor through the external memory interface, to implement a data storage function.

The internal memory may be configured to store a computer-executable program code, and the executable program code includes instructions. The processor runs the instructions stored in the internal memory, to perform various function applications and data processing of the mobile terminal.

The mobile terminal may implement an audio function by using the audio module, the speaker, the receiver, the microphone, the headset jack, and the application processor. For example, music playing, sound recording, and listening are implemented.

The speaker is also referred to as a "loudspeaker", and is configured to convert an audio electrical signal into a sound signal. The mobile terminal may listen to music or answer a hands-free call by using the speaker.

The receiver, also referred to as an "earpiece", is configured to convert an audio electrical signal into a sound signal. When a call is answered or a voice message is listened to by using the mobile terminal, the receiver may be put close to a human ear to listen to a voice.

The microphone, also referred to as a "mic" or "mike", is configured to convert a sound signal into an electrical signal. When making a call or sending a voice message, a user may make a sound by approaching the mouth to the microphone, to input a sound signal to the microphone. At least one microphone may be disposed in the mobile terminal. In some other embodiments, two microphones may be disposed in the mobile terminal, to implement a noise reduction function in addition to collecting a sound signal. In some other embodiments, the mobile terminal may alternatively be provided with three, four, or more microphones to implement sound signal collection, noise reduction, sound source identification, a directional sound recording function, and the like.

The SIM card interface is configured to connect to a SIM card. The SIM card may be inserted into the SIM card interface or removed from the SIM card interface to come into contact with or be separated from the mobile terminal. The mobile terminal may support 1 or N SIM card interfaces, where N is a positive integer greater than 1. The SIM card interface may support a Nano SIM card, a Micro SIM card, a SIM card, or the like. A plurality of cards may be simultaneously inserted into a same SIM card interface. The plurality of cards may be of a same type or different types. The SIM card interface may be further compatible with different types of SIM cards. The SIM card interface may be further compatible with an external memory card. The mobile terminal interacts with a network by using a SIM card to implement functions such as calling and data communication. In some embodiments, the mobile terminal uses an eSIM, namely, an embedded SIM card. The eSIM card may be embedded into the mobile terminal, and cannot be separated from the mobile terminal.

In addition, an intelligent operating system runs above the foregoing components, for example, an iOS^{®} operating system, an Android^{®} open-source operating system, or a Windows^{®} operating system. An application may be installed and run on the operating system.

The operating system of the mobile terminal may use a layered architecture, an event-driven architecture, a microkernel architecture, a microservice architecture, or a cloud architecture. In the embodiments of this application, an Android system with a layered architecture is used as an example to describe a software structure of the mobile terminal.

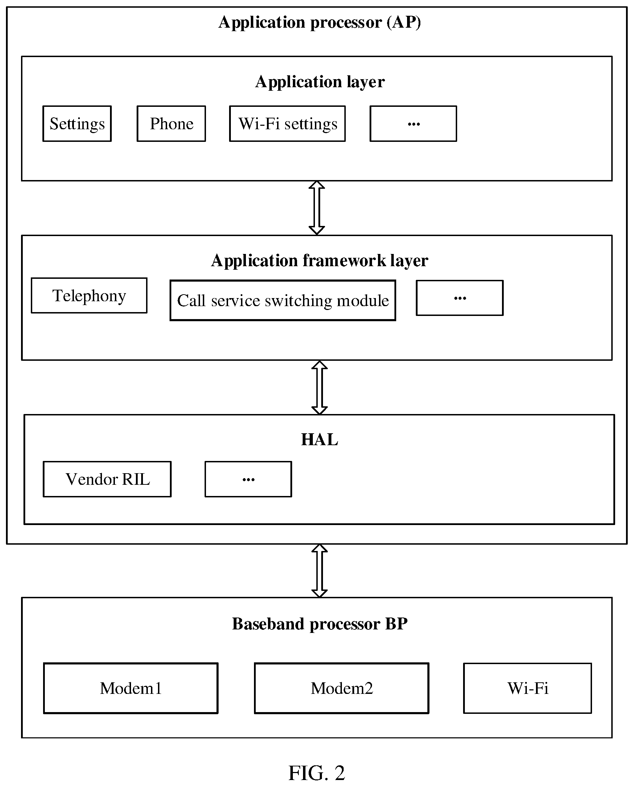

FIG. 2 is a block diagram of a software structure of a mobile terminal according to an embodiment of this application.

In the layered architecture, software is divided into several layers, and each layer has a clear role and task. Layers communicate with each other through a software interface. In some embodiments, the Android system is divided into an application layer, an application framework layer, a hardware abstraction layer (Hardware Abstraction Layer, HAL), a modem (Modem), and a Wi-Fi module from top to bottom.

The application layer, the application framework layer, and the hardware abstraction layer (Hardware Abstraction Layer, HAL) are located on a side of an application processor (Application Processor, AP), and the Modem module and the Wi-Fi module are located on a side of a baseband processor (Baseband Processor, BP).

In a scenario with two SIM cards, two Modem modules may be included, and one SIM card corresponds to one Modem module.

The application layer may include a series of application packages. As shown in FIG. 2, the application packages may include applications such as Phone, Settings, and WLAN. For example, in the embodiments of this application, a preference setting for a SIM card is set by using a settings application, and a call service is performed by using a phone application.

The application framework layer provides an application programming interface (application programming interface, API) and a programming framework for an application at the application layer. The application framework layer includes some predefined functions. In the embodiments, the application framework layer may include a Telephony service.

The Telephony service is mainly used to implement data connection, multimedia message service (Multimedia Message Service, MMS) service logic, Call control, and RILD communication.

In some embodiments, the application framework layer may further include a call service switching module. The call service switching module is configured to: determine whether a current state of the mobile terminal meets a preset switching condition, and if the current state of the mobile terminal meets the preset switching condition, switch between registering a VoWiFi service and registering a VoNR/VoLTE service.

The HAL layer is mainly used to abstract hardware. Hardware abstraction may hide hardware interface details of a specific platform, and provide a fixed and unified interface for an upper layer, making the upper layer hardware-independent. In other words, an upper-layer application does not need to know how lower-layer hardware is implemented, shielding details of underlying implementation.

In the embodiments of this application, the HAL layer includes a wireless communication interface layer (Radio InterfaceLayer, RIL), and the RIL is an abstraction layer between the Telephony service and an underlying Modem, and is used to implement communication conversion between an upper-layer Telephony service and the underlying Modem.

The RIL includes a Vender RIL that is used to actually control the Modem, and implements a standard Modem control interface defined by Android.

The Modem mainly runs radio frequency communication control software in the mobile terminal, and is responsible for sending and receiving data.

In a dual SIM device, the Modem module may include a first Modem module (that is, Modem1 in the figure) corresponding to the first SIM card and a second Modem module (that is, Modem2 in the figure) corresponding to the second SIM card. For example, the Modem1 is responsible for the first SIM card.

In an example embodiment, the call service switching method provided in this application may be performed by the Modem.

In another example embodiment, the call service switching method provided in this application may be performed by the call service switching module at the application framework layer.

The Wi-Fi module provides a Wi-Fi communication solution for the mobile terminal.

It may be understood that, in the mobile terminal, the Wi-Fi module on the BP side may interact with upper-layer software (for example, a Wi-Fi application at the application layer) by using the HAL layer and the application framework layer in the operating system. Details are not described again in this application.

In an embodiment in which the Modem module performs the call service switching method provided in this application, the Wi-Fi module may transfer the detected Wi-Fi signal strength in the current environment to the Modem module. In this way, the Modem module may obtain Wi-Fi signal strength information, and further determine, based on the Wi-Fi signal strength, whether a network switching condition for carrying the call service is met.

For a SIM card that supports a VoWiFi service, a corresponding preference setting may be set by using a setting interface, for example, a mobile network is preferentially used to carry a call service, or a Wi-Fi network is preferentially used to carry a call service.

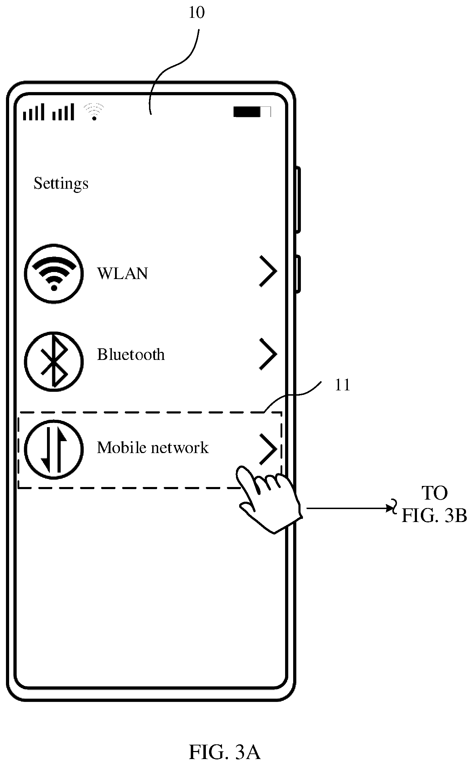

In a scenario, a preference setting for the VoWiFi service of the SIM card is mobile network taking precedence and Wi-Fi taking precedence, that is, the preference setting is the mobile network taking precedence or the Wi-Fi taking precedence. The following describes a schematic diagram of an interface for a preference setting process in this scenario with reference to FIG. 3A to FIG. 3G.

An interface shown in FIG. 3A is an interface 10 of the settings application (Application, APP), and the interface 10 includes a plurality of setting items, for example, a plurality of setting items such as WLAN, Bluetooth, and a mobile network 11. Due to limitation of a size of the schematic diagram, this schematic diagram does not show all setting items in an actual interface of the settings APP.

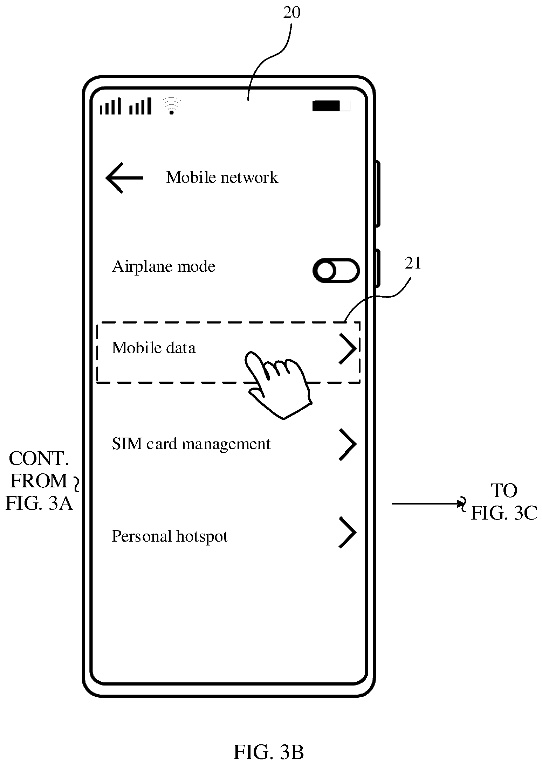

After receiving an operation (for example, a tap operation) performed by the user on the mobile network setting item 11, the mobile phone displays an interface 20 shown in FIG. 3B. The interface 20 is a setting content interface corresponding to the mobile network, and includes a plurality of setting items related to the mobile network, for example, a plurality of setting items such as an airplane mode switch, mobile data 21, SIM card management, and a personal hotspot. This figure shows only some of the setting items in the mobile network.

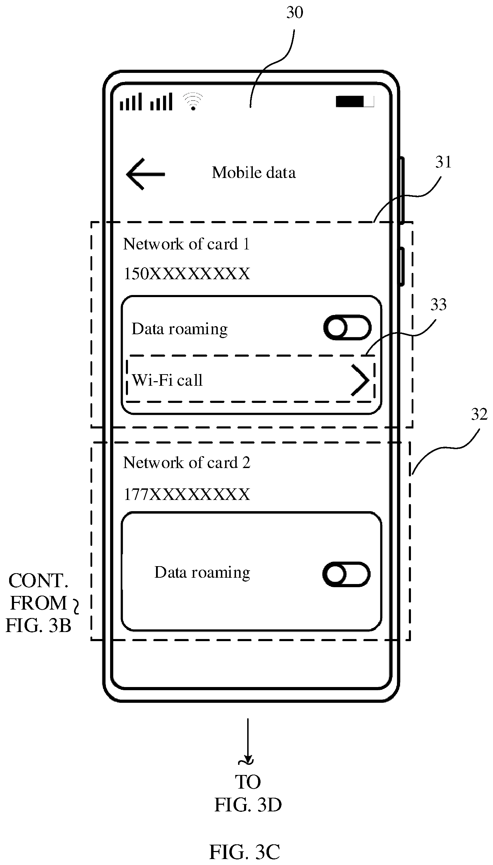

After receiving a tap operation performed by the user on the mobile data 21, the mobile phone displays an interface 30 shown in FIG. 3C. The interface 30 is a setting content interface corresponding to the mobile data, and includes setting content of two SIM cards. For example, an area 31 is used to display mobile network setting content of the first SIM card (that is, a card 1) and a mobile phone number corresponding to the card 1, and an area 32 is used to display mobile network setting content of the second SIM card (that is, a card 2) and a mobile phone number corresponding to the card 2. In this example scenario, the card 1 supports the VoWiFi service, and the card 2 does not support the VoWiFi service. Therefore, as shown in FIG. 3C, a setting item of the network of the card 1 includes a data roaming switch and a Wi-Fi call 33, and a setting item of the network of the card 2 is a data roaming switch.

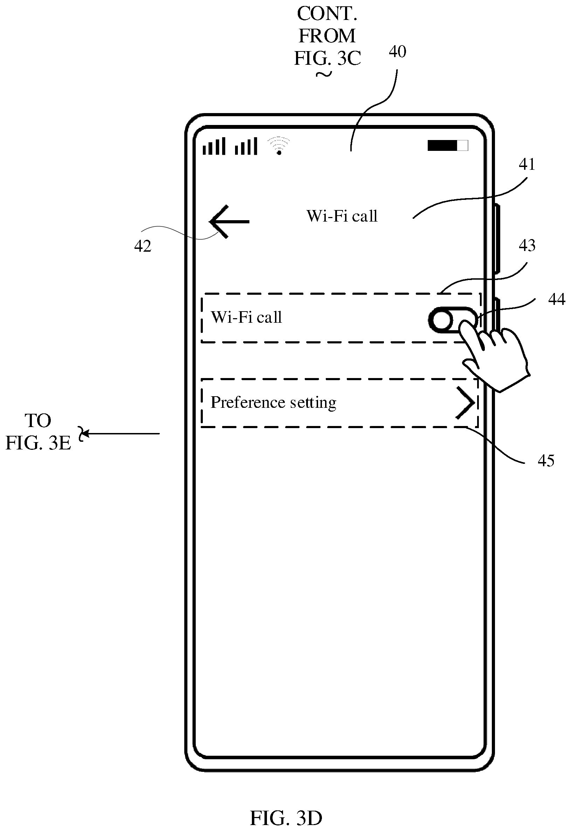

After receiving a tap operation performed by the user on the Wi-Fi call 33, the mobile phone displays an interface 40 shown in FIG. 3D. The interface 40 is a setting content interface of the Wi-Fi call. As shown in FIG. 3D, the interface 40 may include a title 41 (the title is specifically the Wi-Fi call), a rollback button 42, a Wi-Fi call switch 43, and a preference setting 45.

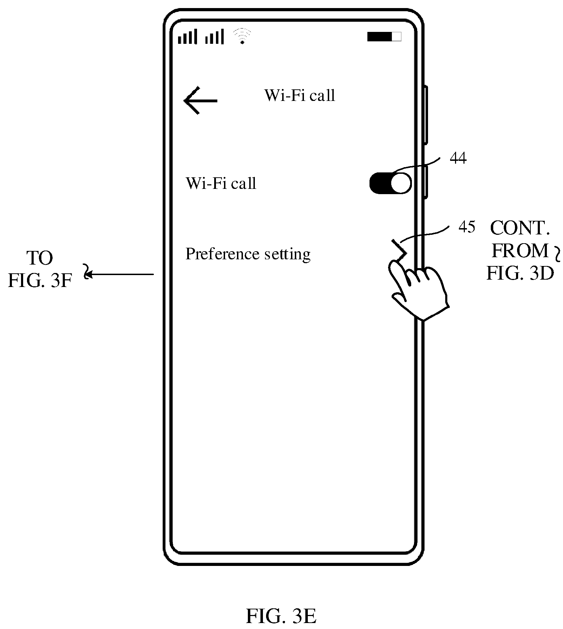

The Wi-Fi call switch 43 includes a switch button 44. The switch button 44 shown in FIG. 3D is in an off state. After the mobile phone receives a tap operation performed by the user on the switch button 44, the switch button 44 switches to an on state, as shown in FIG. 3E. In an example embodiment, when the switch button 44 is in the off state, the preference setting 45 may be in an inoperable state. For example, the preference setting 45 is in a gray font, indicating that the setting item is inoperable. If the mobile phone receives a tap operation performed by the user on the rollback button 42, the interface 30 shown in FIG. 3C is displayed.

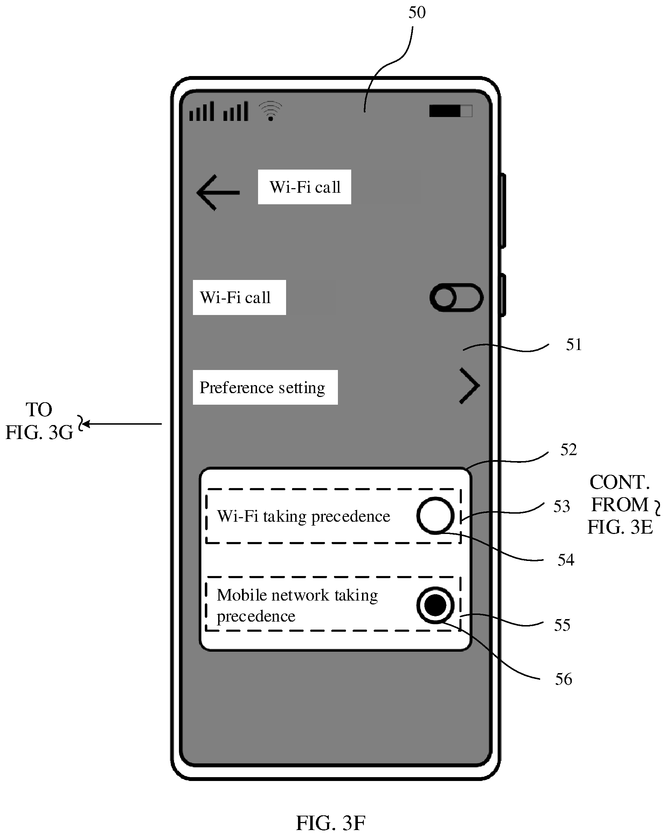

After receiving a tap operation performed by the user on the preference setting 45 in FIG. 3E, the mobile phone displays an interface 50 shown in FIG. 3F. The interface 50 includes a first interface 51 and a pop-up window 52. Content displayed in the first interface 51 is the same as that displayed in the interface 40. In an example embodiment, to highlight the pop-up window 52, an upper layer of the first interface 51 further includes a grayscale layer. In this example, the pop-up window 52 may include Wi-Fi taking precedence 53 and mobile network taking precedence 55. Each of the options includes a selection button, and the button includes two states: selected and unselected.

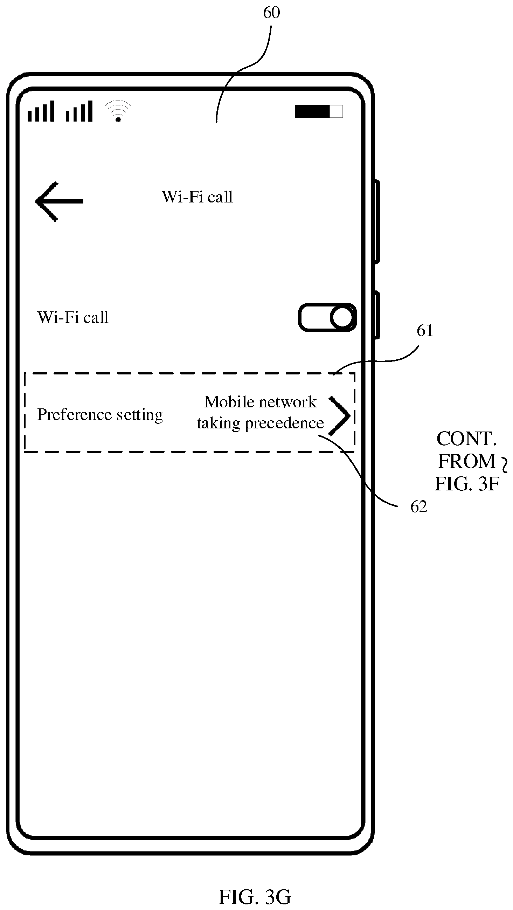

After the button in the unselected state is tapped, the button is switched to the selected state. At the same time, the button in the selected state is switched from the selected state to the unselected state. For example, a button 54 of the Wi-Fi taking precedence 53 is in the unselected state, and a button 56 of the mobile network taking precedence 55 is in the selected state. For example, if the mobile phone receives a tap operation on the button 54, the button 54 is switched from the unselected state to the selected state, and at the same time, the button 56 of the mobile network taking precedence 55 is switched from the selected state to the unselected state. In this example, after the user selects the mobile network taking precedence option, an interface 60 shown in FIG. 3G is displayed. A preference setting 61 of the interface 60 includes a currently selected option 62. In this example, the currently selected option 62 is the mobile network taking precedence.

According to the setting process shown in FIG. 3A to FIG. 3G, the card 1 enables the Wi-Fi call service, and at the same time, the preference setting is the mobile network taking precedence. After the foregoing setting is completed, when detecting that the current state meets the switching condition, the modem module or the call service switching module in the AP may directly trigger a service type that the SIM card switches to register.

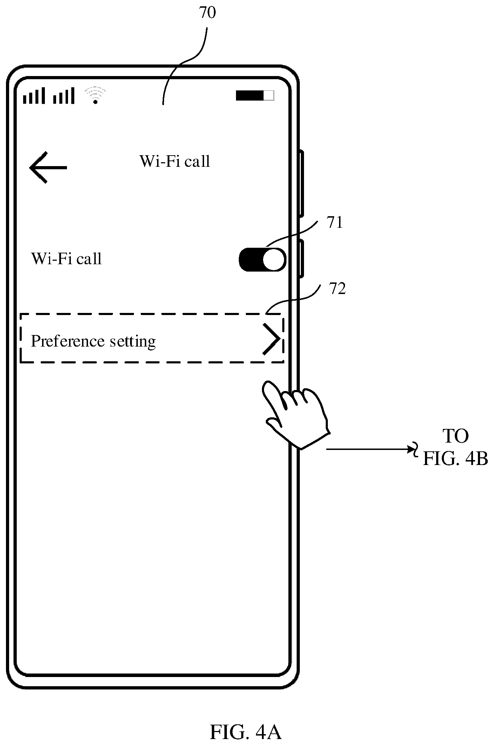

In another scenario, a preference setting option corresponding to a SIM card that supports a VoWiFi service includes mobile network taking precedence, Wi-Fi taking precedence, and an automatic mode. The following describes a schematic diagram of an interface for a preference setting process in this scenario with reference to FIG. 4A to FIG. 4C.

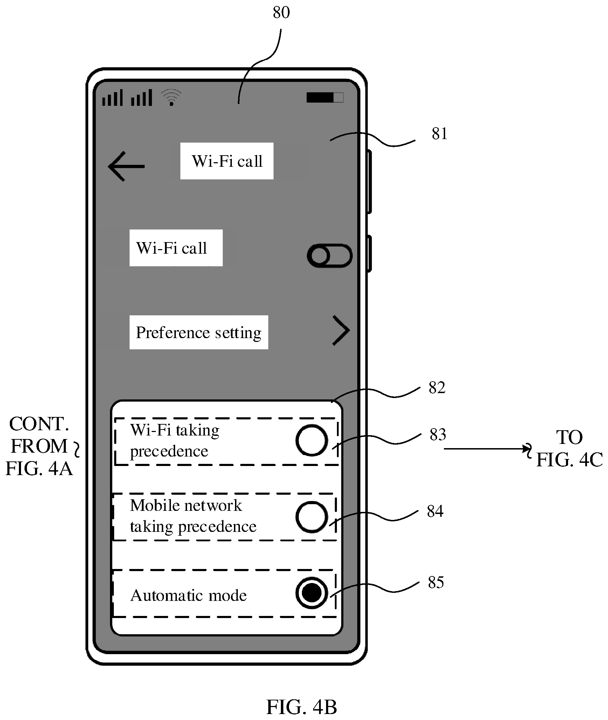

With reference to FIG. 3A to FIG. 3G and FIG. 4A to FIG. 4C, it can be learned that an interface 70 shown in FIG. 4A may be entered by using a process shown in FIG. 3A~FIG. 3D. The interface 70 is a Wi-Fi call setting page. A Wi-Fi call switch button 71 shown in the interface 70 is in an on state. After receiving a tap operation on a preference setting 72, the mobile terminal displays an interface 80 shown in FIG. 4B.

As shown in FIG. 4B, the interface 80 further includes a pop-up window 82 at an upper layer of the interface 70, and the pop-up window 82 is used to display a preference setting option. For example, in this example, the preference setting option includes Wi-Fi taking precedence 83, mobile network taking precedence 84, and an automatic mode 85. A difference from FIG. 3E lies in that the automatic mode 85 is added, and other content is the same. Details are not described herein again.

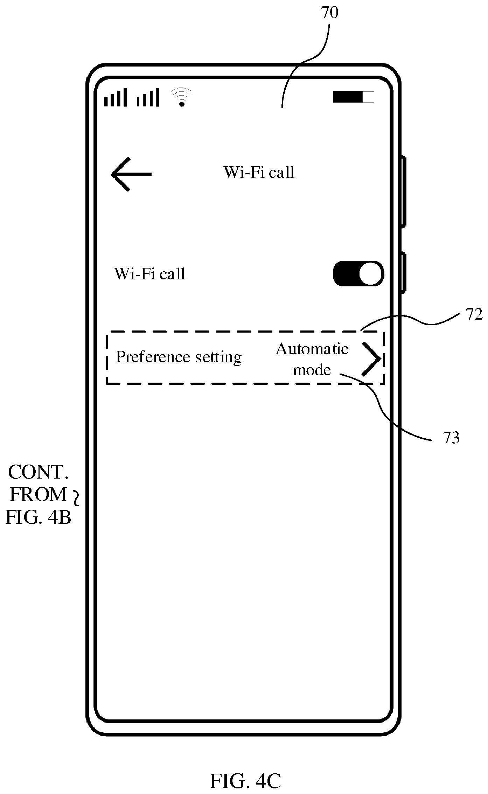

The mobile terminal receives a selection operation on the automatic mode 85, and displays the interface shown in FIG. 4C, that is, a Wi-Fi call setting interface 70. The preference setting 72 in the interface 70 displays a text 73 of the currently selected setting. For example, the automatic mode is selected in this example.

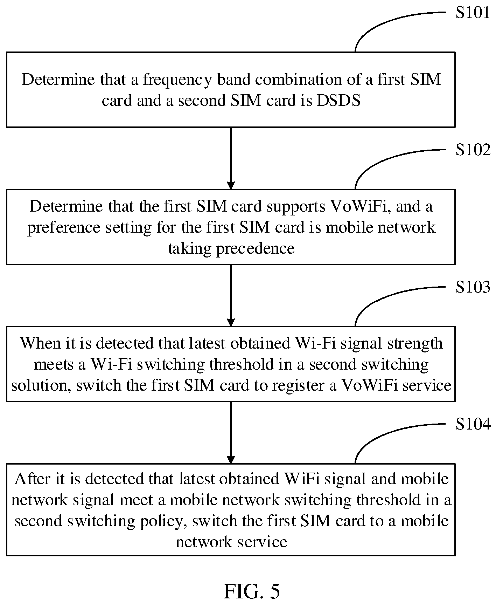

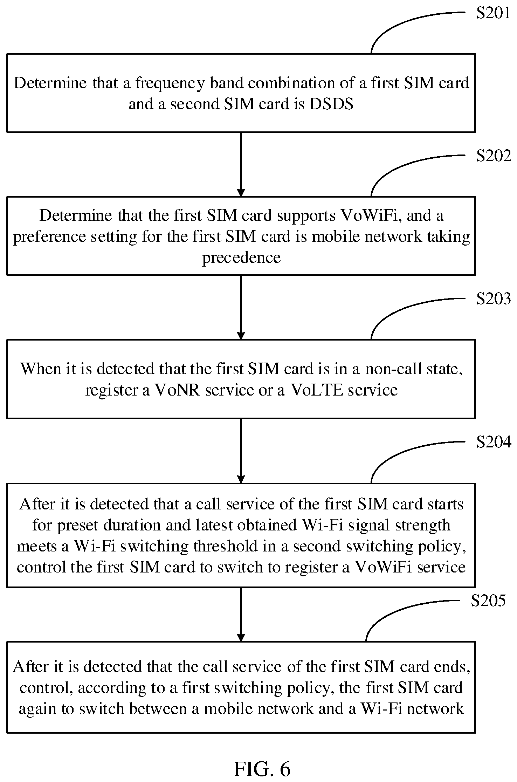

The following describes in detail a call service switching process provided in this application with reference to FIG. 5 and FIG. 6.

FIG. 5 is a flowchart of a call service switching method according to an embodiment of this application.

The call service switching method provided in this embodiment of this application is applicable to a scenario in which at least one SIM card in a dual SIM terminal supports a VoWiFi service, and a preference setting for the at least one SIM card is mobile network taking precedence. Scenario 1: One SIM card (for example, a first SIM card) in the dual SIM terminal supports the VoWiFi service, and the preference setting for the SIM card is the mobile network taking precedence, and the other SIM card (for example, a second SIM card) does not support the VoWiFi service. Scenario 2: Both SIM cards in the dual SIM terminal support the VoWiFi service, and both SIM cards are set to the mobile network taking precedence. In this scenario, any SIM card (for example, a first SIM card) is selected to implement this embodiment.

In this embodiment, when it is detected that a mobile network signal or a Wi-Fi signal of the first SIM card meets the following condition, the first SIM card is immediately switched to register a VoWiFi service:
① A frequency band combination of two SIM cards is a DSDS mode and does not support a DSDA mode.
② The first SIM card supports the VoWiFi and a preference setting for the first SIM card is the mobile network taking precedence.
③ A current environment is covered by the Wi-Fi signal and a current scenario meets a Wi-Fi switching threshold in a second switching policy (that is, a preference setting is a switching policy corresponding to Wi-Fi taking precedence).

In some embodiments, the modem module in the mobile terminal may perform all steps in the following embodiments. In this scenario, setting information of a SIM card may be transferred by the settings APP to the modem module, and Wi-Fi signal strength is detected by the Wi-Fi module and transferred to the modem module.

In some other embodiments, the application processor (AP) in the mobile terminal may alternatively perform all steps in the following embodiments. For example, a call service switching module may be disposed at an application framework layer in the operating system of the mobile terminal. In this scenario, the settings APP may transfer setting information of the SIM card to the call service switching module. The modem module may transfer the detected mobile network signal strength information of the SIM card and a threshold corresponding to the switching policy to the call service switching module, and the Wi-Fi module transfers the detected Wi-Fi signal strength to the modem module. As shown in FIG. 5, the call service switching method provided in this embodiment may include the following steps.

S101: Determine that a frequency band combination of a first SIM card and a second SIM card is a DSDS mode.

When the mobile terminal leaves the factory, a frequency band of a SIM card has been designed. Only a combination of a small part of frequency bands is a DSDA mode, and the rest of the frequency bands are all the DSDS mode. A subsequent step is performed only when it is detected that a current frequency band combination of the two SIM cards is the DSDS mode.

A mobile phone is used as an example. When a new SIM card is inserted into the mobile phone, an intelligent operating system in the mobile phone automatically reads information in the SIM card, including a mobile phone number, a short message service center number, service provider information, and the like, and stores the information in a system of the mobile phone. Further, a frequency band for receiving and transmitting radio frequency signals by the SIM card may be determined based on a mobile network to which the SIM card belongs. Based on the frequency band combination of the two SIM cards, it may be determined whether the current frequency band combination of the two SIM cards is the DSDS mode or the DSDA mode. After it is determined that the frequency band combination of the two SIM cards is the DSDS mode, a subsequent step continues to be performed.

In a possible implementation, the modem module stores information about the SIM card. Therefore, the modem module may directly determine whether the frequency band combination of the current two SIM cards is the DSDS mode.

S102: Determine that the first SIM card supports a VoWiFi service, and a preference setting for the first SIM card is mobile network taking precedence.

In the foregoing scenario 1, the first SIM card is a SIM card that supports the VoWiFi service and is set to the mobile network taking precedence. In the foregoing scenario 2, if both SIM cards support the VoWiFi service and are set to the mobile network taking precedence, the first SIM card may be any SIM card in the two SIM cards.

For example, the user may set the preference setting for the SIM card by using a setting item provided by the settings APP in the mobile phone. The settings APP may transfer setting information of each SIM card in the mobile terminal to the modem module, for example, transfer information such as whether the SIM card supports the VoWiFi service and the preference setting to the modem module, so that the modem module can obtain the setting information of each SIM card in the mobile terminal.

S103: When it is detected that the latest obtained network signal strength meets a Wi-Fi switching threshold in a second switching policy, switch the first SIM card to register the VoWiFi service.

In an example embodiment, the network signal strength in this step may include the Wi-Fi signal strength, or the network signal strength may include the Wi-Fi signal strength and the mobile signal strength.

In an example embodiment, the Wi-Fi module and a wireless communication antenna in the mobile terminal detect whether there is a Wi-Fi signal in the current environment and the Wi-Fi signal strength.

In some embodiments, the mobile terminal may periodically obtain the Wi-Fi signal strength, for example, refresh the Wi-Fi signal strength once every 1s. After each refreshing of the signal strength, whether a network switching policy is met is evaluated (detailed description is provided below, and details are not described herein again).

In an example embodiment, the mobile network signal strength of the SIM card may be obtained through cooperation between the modem module and the mobile communication antenna in the mobile terminal.

Like the process of obtaining the Wi-Fi signal, signal strength of the mobile network signal is also periodically refreshed. For example, the mobile signal strength is refreshed once every 1s, and after each refreshing of the signal strength, whether the network switching policy is met is evaluated.

In some embodiments, different switching policies are configured based on different preference settings. For example, a first switching policy is configured for a scenario with mobile network taking precedence, and a second switching policy is configured for a scenario with Wi-Fi network taking precedence.

In the scenario with mobile network taking precedence, the mobile network is preferentially used to carry the call service, that is, the mobile terminal preferentially camps on the mobile network. The mobile terminal is switched to the Wi-Fi network only when the mobile network signal strength is low.

In the scenario with Wi-Fi network taking precedence, the Wi-Fi network is preferentially used to carry the call service, that is, the mobile terminal preferentially camps on the Wi-Fi network. The mobile terminal is switched to the mobile network only when the Wi-Fi signal strength is low.

For example, description is provided by using an example in which the mobile network is of an LTE network standard. The second switching policy corresponding to the scenario with Wi-Fi taking precedence may be shown in Table 1.

**Table 1**

| Current state of the mobile terminal | Switching scenario | VoWiFi→VoLTE | VoLTE→VoWiFi |
|---|---|---|---|
| Wi-Fi taking precedence | Switching threshold | LTE RSRP≥-97dBm and WiFi RSSI<-74dBm | WiFi RSSI>-67dBm; or LTE RSRP<-113dBm and WiFi RSSI>-74dBm |

RSRP is an English acronym of Reference Signal Receiving Power, which indicates a linear average value of power contributions of resource elements carrying the cell-specific reference signal on a specified measurement frequency band, that is, reference signal received power.

RSSI is an English acronym of Reference Signal Strength Indicator, which indicates total power in a receiving bandwidth, including a useful signal, interference, and noise floor, that is, a received signal strength indicator.

For example, when Wi-Fi RSSI<-74dBm, it indicates that Wi-Fi signal quality is poor, which affects quality of a service carried by the Wi-Fi network, for example, call quality may be affected. When Wi-Fi RSSI≥-67dBm, it indicates that the Wi-Fi signal quality is quite good. When -74dBm≤Wi-Fi RSSI<-67dBm, it indicates that the Wi-Fi signal is between good and poor, and quality of a service carried by the Wi-Fi network may not be affected. In the scenario with Wi-Fi network taking precedence, the Wi-Fi network is preferentially used to carry a service provided that the Wi-Fi signal does not affect quality of the carried service.

In this embodiment of this application, in the foregoing scenario 1 and scenario 2, if the conditions shown in the foregoing ①~③ are met, switching between the mobile network and the WiFi network is directly evaluated based on the threshold in the second switching policy corresponding to the Wi-Fi network taking precedence. For example, in this embodiment, in a scenario in which the preference setting for the first SIM card is mobile network taking precedence, and the current environment is covered by a Wi-Fi signal, the VoWiFi service is preferentially registered, that is, the Wi-Fi network is preferentially used to carry a call service. In this way, when the first SIM card carries the call service by using the Wi-Fi network, the second SIM card may perform a corresponding service by using the mobile network.

In the example shown in Table 1, if it is detected that the latest obtained WiFi RSSI>-67dBm, or LTE RSRP<-113dBm and WiFi RSSI>-74dBm, the first SIM card is controlled to switch to register a VoWiFi service.

In this embodiment, after it is detected that the conditions described in S101, S102, and S103 are met, the first SIM card is directly controlled to switch to register a VoWiFi service. To be specific, regardless of whether the first SIM card is using a mobile network to carry a call service, the first SIM card is switched to register the VoWiFi service.

In an example embodiment, the switching threshold corresponding to the switching policy may be stored in the modem module of the mobile terminal, so that the modem module can obtain the switching threshold and determine whether a current mobile network or Wi-Fi signal meets a corresponding switching threshold.

S104: After it is detected that the latest obtained Wi-Fi signal and the mobile network signal of the first SIM card meet the mobile network switching threshold in the second switching policy, switch the first SIM card to register the mobile network service.

For example, in this embodiment, when the latest obtained signal strength meets LTE RSRP≥-97dBm and WiFi RSSI<-74dBm in Table 1, the first SIM card is switched from the VoWiFi service to register a VoLTE service. Alternatively, after it is detected that Wi-Fi signal quality in the current environment deteriorates or even the current environment is not covered by a Wi-Fi signal, the first SIM card is switched to register the VoLTE service. In other words, when it is detected that the Wi-Fi signal strength affects call service quality, or the current environment changes to be not covered by a Wi-Fi signal, the first SIM card is switched to the VoLTE service.

According to the call service switching method provided in this embodiment, in the dual SIM terminal, when it is detected that the frequency band combination of the two SIM cards is the DSDS mode and does not support the DSDA mode, at least one SIM card supports the VoWiFi service and the preference setting for the SIM card is the mobile network taking precedence, and the current environment is covered by a Wi-Fi signal and the current scenario meets the switching policy (that is, the second switching policy) corresponding to the scenario with Wi-Fi taking precedence, the SIM card is directly and forcibly switched to register the VoWiFi service, that is, the SIM card preferentially uses the Wi-Fi network to carry the call service. In this way, the other SIM card can normally use a radio frequency resource, thereby resolving the problem that in the DSDS mode, one SIM card performs the call service and the other SIM card cannot use the radio frequency resource.

Referring to FIG. 6, FIG. 6 is a flowchart of another call service switching method according to an embodiment of this application. A difference between this embodiment and the embodiment corresponding to FIG. 5 lies in that an occasion for triggering the first SIM card to switch a service varies. In the embodiment shown in FIG. 5, when the foregoing three conditions are detected, the first SIM card is immediately switched to register the VoWiFi service. However, in this embodiment, the SIM card is triggered to switch from the VoLTE (or VoNR) service to the VoWiFi service only after it is detected that the SIM card that supports the VoWiFi service starts to perform the call service.

As shown in FIG. 6, the method may include the following steps.

S201: Determine that a frequency band combination of a first SIM card and a second SIM card is DSDS.

S202: Determine that the first SIM card supports VoWiFi, and a preference setting for the first SIM card is mobile network taking precedence.

In the foregoing scenario 1, the first SIM card is a SIM card that supports the VoWiFi service and is set to the mobile network taking precedence. In the foregoing scenario 2, if both SIM cards support the VoWiFi service and are set to the mobile network taking precedence, the first SIM card may be any SIM card in the two SIM cards.

An implementation process of S201~S202 is the same as an implementation process of S101~S102 in FIG. 1, and details are not described herein again.

S203: When it is detected that the first SIM card is in a non-call state, register a VoNR service or a VoLTE service.

The mobile terminal includes a modem module, and the modem module is mainly used for communication between the mobile terminal and the mobile network, to ensure a communication function of the mobile terminal. Therefore, the modem module may determine whether the SIM card is in a call state. When it is determined that the first SIM card is in the non-call state, the first SIM card is controlled to register the VoNR service or the VoLTE service, that is, the first SIM card still preferentially registers the mobile network in the non-call state.

The VoNR service is a 5G network-based voice communication service, and the VoLTE service is a 4G network-based voice communication service. In a scenario in which the first SIM card supports the VoLTE service, the VoLTE service is registered. In a scenario in which the first SIM card supports the VoLTE service and the VoNR service, the VoNR service is preferentially registered.

S204: After it is detected that a call service of the first SIM card starts for preset duration and latest obtained Wi-Fi signal strength meets a Wi-Fi switching threshold in a second switching policy, control the first SIM card to switch to register a VoWiFi service.

A process of obtaining a Wi-Fi signal is the same as a process of obtaining a Wi-Fi signal in the embodiment shown in FIG. 5. Details are not described herein again.

In some embodiments of this application, when the call service starts to be established, much signaling is transmitted between the mobile terminal and a base station. To avoid affecting the call service establishment process by switching to register a VoWiFi service during signaling transmission, in this embodiment, the first SIM card is controlled to switch to register the VoWiFi service only after it is detected that S201 and S202 and the Wi-Fi switching threshold (such as the switching threshold for VoLTE→VoWiFi in Table 1) in the second switching policy are met, and the call service starts for the preset duration (such as 2-3s).

In another embodiment of this application, when the conditions described in S201, S202, and S203 are met, if it is detected that the first SIM card starts the call service, the first SIM card may be immediately triggered to switch to register the VoWiFi service.

S205: After it is detected that the call service of the first SIM card ends, control, according to the first switching policy, the first SIM card again to switch between a mobile network and a Wi-Fi network.

In this embodiment, when the first SIM card is in a non-call state, a VoNR service or a VoLTE service is preferentially registered. In this case, the first SIM card does not occupy a radio frequency resource, and the second SIM card can normally use the radio frequency resource. However, when the first SIM card starts the call service, the first SIM card occupies the radio frequency resource, and the second SIM card cannot normally use the radio frequency resource. In this scenario, when the call service starts for preset duration and the conditions described in S201, S202, and S203 are met, the first SIM card may be switched to the VoWiFi service. In this way, the call service does not occupy the radio frequency resource, and the second SIM can normally use the radio frequency resource. After the call service of the first SIM card ends, switching of the registered service of the first SIM card is evaluated again according to the switching policy (that is, the first switching policy) corresponding to the preference setting of mobile network taking precedence. To be specific, in the non-call state, the mobile terminal preferentially registers the VoNR service or the VoLTE service, that is, controls network switching of the SIM card with reference to the switching policy (that is, the first switching policy) corresponding to the mobile network taking precedence. However, in the call state, the mobile terminal controls the network switching process of the SIM card with reference to the switching threshold shown in Table 1 in the switching policy (that is, the second switching policy) corresponding to Wi-Fi taking precedence. After the call ends, the network switching of the SIM card is still controlled according to the first switching policy.

In an example embodiment, the first switching policy may be shown in Table 2. Table 2 shows a switching threshold between the VoTLE service and the VoWiFi service, and a switching threshold between the VoNR and the VoWiFi.

**Table 2**

| Current state of the mobile terminal | Switching policy | | |
|---|---|---|---|
| Call service with mobile network taking precedence is in an idle state | Switching scenario | VoNR→VoWiFi | VoWiFi→VoNR |
| | Switching threshold | NR RSRP<-106dBm and WiFi RSSI≥-75dBm | NR RSRP≥-103dBm, or WiFi RSSI<-78dBm and NR RSRP≥-106dBm |
| Call service with mobile network taking precedence is in an idle state | Switching scenario | VoTLE→VoWiFi | VoWiFi→VoTLE |
| | Switching threshold | LTE RSRP<-108dBm and WiFi RSSI≥-75dBm | LTE RSRP≥-105dBm, or WiFi RSSI<-78dBm and LTE RSRP≥-108dBm |

As described above, when the mobile terminal is in the call state, and the network switching process of the SIM card is controlled with reference to the second switching policy shown in Table 1. If the mobile terminal is in the non-call state, the network switching process of the SIM card is controlled with reference to the first switching policy shown in Table 2.

In a scenario, the mobile terminal supports only an LTE network, and the mobile terminal is in the non-call state. For example, if a user moves from outdoors to indoors, and collected network signal strength meets LTE RSRP<-108dBm and WiFi RSSI≥-75dBm, the first SIM card is switched to register a VoWiFi service. For another example, if the user moves from indoors to outdoors, and the collected signal strength meets LTE RSRP≥-105dBm, or WiFi RSSI<-78dBm and LTE RSRP≥-108dBm, the first SIM card is switched to the VoLTE service.

In another scenario, if the mobile terminal supports a 5G network, the mobile terminal is in a non-call state, and collected network signal strength meets NR RSRP<-106dBm and WiFi RSSI≥-75dBm, the first SIM card is switched to register a VoWiFi service. For another example, if the user moves from indoors to outdoors, and the collected signal strength meets NR RSRP≥-103dBm, or WiFi RSSI<-78dBm and NR RSRP≥-106dBm, the first SIM card is switched to the VoNR service.

According to the call service switching method provided in this embodiment, in the dual SIM terminal, it is detected that the frequency band combination of the two SIM cards is the DSDS mode and does not support the DSDA mode, at least one of the two SIM cards supports the VoWiFi service and the SIM card is set to the mobile network taking precedence, and the current environment is covered by a Wi-Fi signal and the current scenario meets the switching policy (that is, the second switching policy) corresponding to the scenario with Wi-Fi network taking precedence. The SIM card is forcibly switched to register a VoWiFi service only after it is detected that a call service of the card starts for preset duration. To be specific, after the SIM card is set to mobile network taking precedence and the call service of the SIM card starts for the preset duration, the Wi-Fi network is preferentially used to carry the call service. In this way, the other SIM card can normally use a radio frequency resource, thereby resolving the problem that in the DSDS mode, one SIM card performs the call service and the other SIM card cannot use the radio frequency resource. In addition, according to this solution, network switching is performed only after it is detected that the call service of the SIM card that meets the foregoing condition starts for the preset duration. This avoids unstable call quality caused by network switching in a call service establishment phase, thereby ensuring the call quality without occupying a radio frequency resource, so that the other SIM card can use the radio frequency resource.

In a scenario in which one SIM card supports a VoWiFi service and the other SIM card does not support the VoWiFi service, if an interface for setting a preference setting for the SIM card is not changed, that is, in a preference setting process shown in FIG. 3A to FIG. 3G, mobile network taking precedence is selected for the SIM card that supports the VoWiFi service, the SIM card is directly triggered to switch to a network that carries the call service when the modem module or the call service switching module on the AP side detects that the foregoing switching condition is met in the call service switching method.

In a scenario in which one SIM card supports the VoWiFi service and the other SIM card does not support the VoWiFi service, if an automatic mode is added to a preference setting option, as shown in FIG. 4A to FIG. 4C, mobile network taking precedence or the automatic mode is selected for the SIM card that supports the VoWiFi service. In the call service switching method, when the modem module or the call service switching module on the AP side detects that the foregoing switching condition is met, the SIM card is directly triggered to switch to a network that carries the call service.

A call service switching method in a scenario in which two SIM cards in the dual SIM terminal both support a VoWiFi service is similar to the processes shown in FIG. 5 and FIG. 6, and a difference lies in which SIM card is selected to execute this solution. If both SIM cards are set to mobile network taking precedence or an automatic mode, one SIM card is randomly selected to perform the foregoing call service switching method shown in FIG. 5 or FIG. 6. If one of the two SIM cards is set to the automatic mode and the other card is set to the mobile network taking precedence, the SIM card that is set to the automatic mode is selected to perform the foregoing call service switching method shown in FIG. 5 or FIG. 6. Details are not described herein again.

When the integrated unit is implemented in a form of a software functional unit and sold or used as an independent product, the integrated unit may be stored in a computer-readable storage medium. Based on such an understanding, the technical solutions of the embodiments essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in the embodiments. The foregoing storage medium includes any medium that can store program code, for example, a flash memory, a removable hard disk, a read-only memory, a random access memory, a magnetic disk, or an optical disc.

The foregoing descriptions are merely specific implementations of this application, but are not intended to limit the protection scope of this application. Any variation or replacement made within the technical scope disclosed in this application shall fall within the protection scope of this application. Therefore, the protection scope of this application shall be subject to the protection scope of the claims.

## Claims

1. A call service switching method, applied to a mobile terminal, wherein the mobile terminal comprises a first SIM card and a second SIM card, at least one of the two SIM cards supports a VoWiFi service, and the method comprises:
determining that a frequency band combination of the first SIM card and the second SIM card is a DSDS mode;
determining that the first SIM card supports the VoWiFi service and that a call service preference setting for the first SIM card is mobile network taking precedence or an automatic mode; and
switching the first SIM card to the VoWiFi service when it is detected that latest obtained network signal strength meets a Wi-Fi switching threshold in a second switching policy, wherein
the second switching policy is a switching policy corresponding to Wi-Fi taking precedence, the Wi-Fi switching threshold in the second switching policy is less than a Wi-Fi switching threshold in a first switching policy, the first switching policy is a switching policy corresponding to the mobile network taking precedence, and the network signal strength comprises Wi-Fi signal strength or Wi-Fi signal strength and mobile network signal strength.

2. A call service switching method, applied to a mobile terminal, wherein the mobile terminal comprises a first SIM card and a second SIM card, at least one of the two SIM cards supports a VoWiFi service, and the method comprises:
determining that a frequency band combination of the first SIM card and the second SIM card is a DSDS mode;
detecting that the first SIM card supports the VoWiFi service and that a call service preference setting for the first SIM card is mobile network taking precedence or an automatic mode;
registering, by the first SIM card, a mobile network-based voice communication service when the first SIM card is in a non-call state; and
switching the first SIM card to the VoWiFi service when the first SIM card is in a call state and if it is detected that latest obtained network signal strength meets a Wi-Fi switching threshold in a second switching policy, wherein
the second switching policy is a switching policy corresponding to Wi-Fi taking precedence, the Wi-Fi switching threshold in the second switching policy is less than a Wi-Fi switching threshold in a first switching policy, the first switching policy is a switching policy corresponding to the mobile network taking precedence, and the network signal strength comprises Wi-Fi signal strength or Wi-Fi signal strength and mobile network signal strength.

3. The method according to claim 1, wherein the method further comprises: switching the first SIM card to a mobile network-based voice communication service when it is detected that the latest obtained network signal strength meets a mobile network switching threshold in the second switching policy, wherein the mobile network switching threshold in the second switching policy is greater than a mobile network switching threshold in the first switching policy.

4. The method according to claim 2, wherein the switching the first SIM card to the VoWiFi service when the first SIM card is in a call state and if it is detected that latest obtained network signal strength meets a Wi-Fi switching threshold in a second switching policy comprises:
switching the first SIM card to the VoWiFi service after a call service of the first SIM card starts for preset duration and if it is detected that the latest obtained network signal strength meets the Wi-Fi switching threshold in the second switching policy.

5. The method according to claim 2 or 4, wherein the method further comprises:
after it is detected that the call service of the first SIM card ends, controlling, according to the first switching policy, the first SIM card to switch between a mobile network and a Wi-Fi network.

6. The method according to claim 1 or 2, wherein a preference setting option for a call service in the mobile terminal comprises the mobile network taking precedence and the Wi-Fi taking precedence; and
the first SIM card supports the VoWiFi service and the first SIM card is set to the mobile network taking precedence, and the second SIM card does not support the VoWiFi service; or
both the first SIM card and the second SIM card support the VoWiFi service, and at least the first SIM card is set to the mobile network taking precedence.

7. The method according to claim 1 or 2, wherein a preference setting option for a call service in the mobile terminal comprises the mobile network taking precedence, the Wi-Fi taking precedence, and the automatic mode; and
the first SIM card supports the VoWiFi service and the first SIM card is set to the automatic mode, and the second SIM card does not support the VoWiFi service; or
both the first SIM card and the second SIM card support the VoWiFi service, and at least the first SIM card is set to the mobile network taking precedence or the automatic mode, or both the first SIM card and the second SIM card are set to the mobile network taking precedence or the automatic mode.

8. The method according to any one of claims 1-7, wherein a process of obtaining the latest network signal strength comprises: periodically detecting, by the mobile terminal, the Wi-Fi signal strength and the mobile network signal strength.

9. The method according to any one of claims 1-8, wherein the determining that the first SIM card supports the VoWiFi service and that a call service preference setting for the first SIM card is mobile network taking precedence or an automatic mode comprises:
obtaining a voice call network supported by each SIM card in a settings application in the mobile terminal; and
obtaining a preference setting for a Wi-Fi call in the settings application in the mobile terminal.

10. The method according to any one of claims 1-9, wherein the mobile terminal comprises a modem module and a Wi-Fi module, the modem module is configured to obtain mobile network signal strength of the first SIM card, and the Wi-Fi module is configured to obtain Wi-Fi signal strength of an environment in which the mobile terminal is currently located; and
the switching the first SIM card to the VoWiFi service when it is detected that latest obtained network signal strength meets a Wi-Fi switching threshold in a second switching policy comprises:
receiving, by the modem module, the Wi-Fi signal strength obtained by the Wi-Fi module, and determining, based on a latest obtained mobile network signal and the Wi-Fi signal strength, that the network signal strength meets the Wi-Fi switching threshold in the second switching policy, and switching the first SIM card to the VoWiFi service.

11. A mobile terminal, wherein the mobile terminal comprises a memory, an application processor, and a baseband processor; the memory is configured to store program code; and the application processor or the baseband processor is configured to run the program code, to enable the mobile terminal to implement the call service switching method according to any one of claims 1 to 10.

12. A computer-readable storage medium, wherein the computer-readable storage medium stores instructions, and when the instructions are run on a mobile terminal, the mobile terminal is enabled to perform the call service switching method according to any one of claims 1 to 10.

13. A chip system, comprising:
an application processor, a baseband processor, and an interface, wherein the interface is configured to receive code instructions and transmit the code instructions to the application processor or the baseband processor; and the application processor or the baseband processor runs the code instructions to implement the call service switching method according to any one of claims 1-10.
